# EUROPÄISCHE PATENTSCHRIFT

(11) **EP 2 021 199 B1**
(45) Veröffentlichungstag und Bekanntmachung des Hinweises auf die Patenterteilung: **21.07.2010**
(21) Anmeldenummer: 07725067.8
(22) Anmeldetag: 10.05.2007
(51) Int. Cl.: B60J 7/185

(54) **ZENTRIEREINRICHTUNG FÜR EIN KRAFTFAHRZEUG MIT EINEM FALT- ODER KLAPPVERDECK ODER HARDTOP**
CENTERING DEVICE FOR A MOTOR VEHICLE WITH A FOLDING OR RETRACTABLE TOP OR HARDTOP
DISPOSITIF DE CENTRAGE POUR VÉHICULE AUTOMOBILE MUNI D'UNE CAPOTE PLIABLE OU RABATTABLE OU D'UN TOIT RIGIDE

(30) Priorität: 26.05.2006 DE 102006024612
(43) Veröffentlichungstag der Anmeldung: 11.02.2009
(73) Patentinhaber: Bayerische Motoren Werke Aktiengesellschaft, 80809 München (DE)
(72) Erfinder: BAUMGARTNER, Gerd, 85757 Karlsfeld (DE)
(86) Internationale Anmeldenummer: PCT/EP2007/004145
(87) Internationale Veröffentlichungsnummer: WO 2007/137684

(56) Entgegenhaltungen:
- EP-A- 0 410 683
- DE-A1- 10 224 097

## Beschreibung

Die Erfindung betrifft eine Zentriereinrichtung für ein Kraftfahrzeug mit einem Falt- oder Klappverdeck oder Hardtop, mit den im Oberbegriff des Patentanspruches 1 angegebenen Merkmalen.

Eine derartige Zentriereinrichtung ist in der DE 102 24 097 A1 an einem Kraftfahrzeug mit insbesondere einem Faltverdeck zwischen einem vorderen Bereich beispielsweise des Faltverdecks und einem oberen Windlauf über der vorderen Windschutzscheibe vorgesehen. Außerdem ist eine Verriegelungseinrichtung vorgesehen, die das geschlossene Faltverdeck am oberen Windlauf festhält. Auf Grund von Elastizitäten insbesondere des Verdeckgestänges dürfte das geschlossene und verriegelte Faltverdeck beim Überfahren von Bodenunebenheiten Bewegungen ausführen, bei denen der Zentrierbolzen hart an der Zentrierbuchse anschlägt und dabei störende Geräusche verursacht. Derartige Geräusche dürften auch dann auftreten, wenn der Zentrierbolzen bei geschlossenem Faltverdeck an der Zentrierbuchse anliegt und im Fahrbetrieb auf Grund von Elastizitäten insbesondere des Faltverdecks kurzzeitig von der Zentrierbuchse abhebt und nachfolgend hart an der Zentrierbuchse anschlägt.

Der Erfindung liegt die Aufgabe zu Grunde, eine Zentriereinrichtung mit den Merkmalen im Oberbegriff des Patentanspruches 1 anzugeben, die im Fahrbetrieb des Kraftfahrzeugs keine oder weniger Geräusche verursacht.

Diese Aufgabe ist durch die Merkmale im Patentanspruch 1 gelöst. Vorteilhafte Ausgestaltungen der Erfindung sind den Unteransprüchen entnehmbar.

Dadurch, dass die Zentrierbuchse an dem Zentrierbuchsenträger zwischen Anschlägen axial verstellbar angeordnet und von einer elastischen Federeinrichtung gegen einen Anschlag zu dem Zentrierbolzen belastet ist, liegt der Zentrierbolzen bei geschlossenem Falt- oder Klappverdeck oder Hardtop im wesentlichen ständig axial an der Zentrierbuchse an und kann deshalb bei elastischen Verformungen des geschlossenen Falt- oder Klappverdecks oder Hardtops nicht hart und geräuschvoll an der Zentrierbuchse anschlagen. Da außerdem die Zentrierbuchse von der elastischen Federungseinrichtung gegen einen Anschlag zu dem Zentrierbolzen belastet ist, werden elastische Bewegungen des geschlossenen Falt- oder Klappverdecks oder Hardtops im Bereich der Zentriereinrichtung durch die Federungseinrichtung verhindert oder zumindest reduziert, falls eine Verriegelungseinrichtung das geschlossene Falt- oder Klappverdeck oder Hardtop nicht ausreichend stabil festhält. Die Zentriereinrichtung kann auch größere Bauteiltoleranzen ausgleichen und eine Überlastung der Verriegelungseinrichtung verhindern.

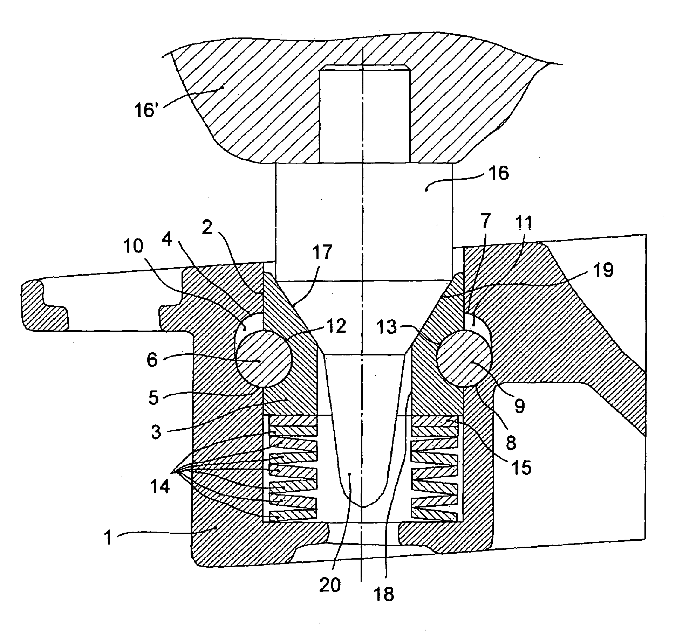

Ein Ausführungsbeispiel der Erfindung wird anhand einer Zeichnung mit einer einzigen Figur näher erläutert, die einen vereinfachten Querschnitt durch die wesentlichen Teile der Zentriereinrichtung darstellt.

In der einzigen Figur ist die an einem Kraftfahrzeug mit Falt- oder Klappverdeck oder Hardtop vorgesehene Zentriereinrichtung in einer Lage bei geschlossenem Falt- oder Klappverdeck oder Hardtop dargestellt, wobei das Falt- oder Klappverdeck oder Hardtop von einer nicht dargestellten Verriegelungseinrichtung an einem ebenfalls nicht dargestellten oberen Windlauf über einer vorderen, nicht dargestellten Windschutzscheibe des Kraftfahrzeugs verriegelt ist. Der Windlauf weist einen Zentrierbuchsenträger 1 mit einer etwa vertikalen Führungsöffnung 2 auf, in der eine Zentrierbuchse 3 von Anschlägen 4, 5, 6 bzw. 7, 8, 9 begrenzt axial höhenverstellbar ist.

Die den axialen Verstellweg der Zentrierbuchse 3 begrenzenden Anschläge 4, 5, 6 bzw. 7, 8, 9 sind durch zwei Längsausnehmungen 10, 11 in dem Zentrierbuchsenträger 1 und zwei Anschlagkörper 6 bzw. 9 gebildet, wobei ein Umfangsbereich des Anschlagkörpers 6 bzw. 9 in eine Ausnehmung 12 bzw. 13 in der Zentrierbuchse 3 weitgehend spielfrei eingreift. Ein anderer Umfangsbereich des Anschlagkörpers 6 bzw. 9 greift in Achsrichtung der Zentrierbuchse 3 verstellbar in die betreffende Längsausnehmung 10 bzw. 11 ein und wirkt mit den axialen Endbereichen 4, 5 bzw. 7, 8 der betreffenden Längsausnehmung 10 bzw. 11 derart zusammen, dass der axiale Verstellweg der Zentrierbuchse 3 begrenzt ist.

Bei dem Ausführungsbeispiel sind die Längsausnehmungen 10, 11 jeweils durch ein Langloch und die Anschlagkörper 6, 9 jeweils durch einen im Querschnitt kreisförmigen Bolzen oder Stift gebildet.

Die Zentrierbuchse 3 ist von einer elastischen Federeinrichtung nach oben belastet, wodurch bei geöffnetem Falt- oder Klappverdeck oder Hardtop die Bolzen 6, 9 an den oberen Endbereichen 4, 7 der Langlöcher 10, 11 anliegen und dadurch den Verstellbereich der Zentrierbuchse 3 nach oben begrenzen. Die Federeinrichtung weist mehrere Tellerfedern 14 und eine Beilagscheibe 15 auf, die in Reihe hintereinander angeordnet und axial vorgespannt zwischen der unteren Stirnfläche der Zentrierbuchse 3 und einer Bodenfläche der Führungsöffnung 2 im Zentrierbuchsenträger 1 angeordnet sind. Die Zentrierbuchse 3 weist eine zentrale axiale Zentrieröffnung 18 auf, die am oberen Randbereich mit einem Zentrierkegelstumpf 19 versehen ist.

Die Zentriereinrichtung weist einen vorstehenden Zentrierbolzen 16 an einem nur angedeuteten Zentrierbolzenträger 16' auf, der durch einen vorderen Bereich des geschlossenen Falt- oder Klappverdecks oder Hardtops gebildet ist. Der Zentrierbolzen 16 weist an seinem vorstehenden Bereich eine kegelstumpfförmige Zentrierfläche 17 auf, die beim Eindringen zumindest eines Bereiches des Zentrierbolzens 16 in die Zentrieröffnung 18 der Zentrierbuchse 3 mit dem Zentrierkegelstumpf 19 der Zentrierbuchse 3 zusammen wirkend den Zentrierbolzen 16 radial zentriert. Dabei wird eventuell die Zentrierbuchse 3 gegen die Vorspannkraft der Tellerfedern 14 in der Führungsöffnung 2 teilweise bzw. vollständig nach unten oder teilweise bzw. vollständig nach unten und dann teilweise bzw. vollständig nach oben verschoben, bis die verriegelte Schließlage des Falt- oder Klappverdecks oder Hardtops erreicht ist. Der Zentrierbolzen 16 dringt beim Schließen des Falt- oder Klappverdecks oder Hardtops axial in die Zentrieröffnung 18 ein, bzw. wird axial aus der Zentrieröffnung 18 entfernt, wenn das zuvor entriegelte Falt- oder Klappverdeck oder Hardtop geöffnet wird.

Bei geschlossenem Falt- oder Klappverdeck oder Hardtop kann sich die Zentrierbuchse 3 in einer etwa mittleren Lage innerhalb des Verstellbereiches der Zentrierbuchse 3 oder an dem einen oder anderen Endbereich des Verstellbereiches befinden.

An den kleineren Durchmesser der kegelstumpfförmigen Zentrierfläche 17 des Zentrierbolzens 16 schließt sich eine axial nach unten vorstehende Zentriemase 20 an, die gegenüber der Zentrieröffnung 18 einen kleineren, nach unten sich verjüngenden Durchmesser aufweist und beim Eindringen des Zentrierbolzens 16 in die Zentrieröffnung 18 mit der Zentrieröffnung 18 zusammen wirkend eine radiale Vorzentrierung des Zentrierbolzens 16 bewirkt.

Von dem Ausführungsbeispiel abweichend kann der Zentrierbolzen auch an dem Windlauf oder an einem daran abgestützten bzw. befestigten Bauteil abstehend angeordnet sein, wobei dann die Zentrierbuchse an einem vorderen Bereich des Falt- oder Klappverdecks oder Hardtops verstellbar angeordnet ist.

Bei einer weiteren alternativen Ausführung ist der Zentrierbolzen in einer Führungsöffnung des Zentrierbolzenträgers zwischen Anschlägen axial verstellbar angeordnet und von einer elastischen Federeinrichtung gegen einen Anschlag zu der feststehenden Zentrierbuchse belastet. Die kegelstumpfförmige Zentrierfläche am Zentrierbolzen kann auch entfallen oder durch eine andere Fläche oder Kante gebildet sein. Ebenso kann der Zentrierkegelstumpf an der Zentrierbuchse entfallen oder durch eine andere Fläche oder Kante beispielsweise durch eine gekrümmte Zentrieranlauffläche gebildet sein. Die Anschläge können auf völlig andere Weise gebildet sein. Ein Anschlag kann auch durch die elastische Federeinrichtung gebildet sein, wenn diese ihre Blocklänge erreicht hat. Bei Verwendung einer Längsausnehmung kann diese in der Zentrierbuchse oder in dem Zentrierbuchsenträger ausgebildet sein, wobei dann der Anschlagkörper an dem anderen Teil, an dem Zentrierbuchsenträger bzw. an der Zentrierbuchse angeordnet ist. Die Längsausnehmung kann auch beispielsweise in einer axialen Richtung nach außen offen in dem betreffenden Bauteil, beispielsweise in dem Zentrierbuchsenträger oder Zentrierbolzenträger ausgebildet sein. Beispielsweise in diesem Fall kann die Längsausnehmung an der axial offenen Stirnseite von einem separaten Bauteil verschlossen oder radial derart verengt sein, dass sich das elastische Federelement an diesem Bauteil axial abstützen kann. Die Längsausnehmung kann auch durch eine Ringausnehmung an einem Innenumfang einer die Zentrierbuchse aufnehmenden Öffnung oder an einem Außenumfang der Zentrierbuchse und der Anschlagkörper durch einen Anschlagring gebildet sein, wobei dann jeweils in Achsrichtung der Zentrierbuchse die Längserstreckung der Ringausnehmung größer als die Längserstreckung des Anschlagringes ist. Die Zentriereinrichtung verhindert oder vermindert Geräusche des Zentrierbolzens im Fahrbetrieb und entlastet eine übliche Verriegelungseinrichtung. Außerdem ermöglicht die Zentriereinrichtung eine sichere Verriegelung der Verriegelungseinrichtung. Bauteiltoleranzen werden von der Zentriereinrichtung ausgeglichen, die auch größer gewählt werden können. Die elastische Federeinrichtung kann wenigstens ein beliebiges elastisches Element, beispielsweise auch ein anderes metallisches Federelement oder eine Gummifeder oder wenigstens ein Element aus einem Elastomer aufweisen.

## Patentansprüche

1. Zentriereinrichtung für ein Kraftfahrzeug mit einem Falt- oder Klappverdeck oder Hardtop, mit einem vorstehenden Zentrierbolzen (16) an einem Zentrierbolzenträger (16') und einer Zentrierbuchse (3) an einem Zentrierbuchsenträger (1), mit einer Zentrieröffnung (18) in der Zentrierbuchse (3), die beim Eindringen zumindest eines Bereiches des Zentrierbolzens (16) in die Zentrieröffnung (18) den Zentrierbolzen (16) radial zentriert, **dadurch gekennzeichnet, dass** entweder die Zentrierbuchse (3) in einer Führungsöffnung (2) des Zentrierbuchsenträgers (1) oder der Zentrierbolzen in einer Führungsöffnung des Zentrierbolzenträgers zwischen Anschlägen (4, 5, 6 bzw. 7, 8, 9) axial verstellbar angeordnet und von einer elastischen Federeinrichtung (14) gegen einen Anschlag (4 bzw. 7) zu dem feststehenden Teil, zu dem Zentrierbolzen (16) oder zu der Zentrierbuchse belastet ist.

2. Zentriereinrichtung nach Patentanspruch 1, **dadurch gekennzeichnet, dass** der Zentrierbolzenträger (16') durch einen vorderen Bereich des geschlossenen Falt- oder Klappverdecks oder Hardtops und der Zentrierbuchsenträger (1) durch einen Bereich oder ein Bauteil eines oberen Windlaufes über der vorderen Windschutzscheibe des Kraftfahrzeugs oder umgekehrt gebildet sind.

3. Zentriereinrichtung nach Patentanspruch 1 oder 2, **dadurch gekennzeichnet, dass** der Zentrierbolzen (16) an seinem vorstehenden Bereich eine Zentrierfläche (17) aufweist, die mit einem Randbereich (19) der Zentrieröffnung (18) zusammen wirkend den Zentrierbolzen (16) radial zentriert.

4. Zentriereinrichtung nach Patentanspruch 3, **dadurch gekennzeichnet, dass** die Zentrierfläche (17) kegelstumpfförmig ausgebildet ist und sich an den kleineren Durchmesser der kegelstumpfförmigen Zentrierfläche (17) eine axial vorstehende Zentriemase (20) anschließt, die gegenüber der Zentrieröffnung (18) einen kleineren Durchmesser aufweist und beim Eindringen des Zentrierbolzens (16) in die Zentrieröffnung (18) mit der Zentrieröffnung (18) zusammen wirkend eine radiale Vorzentrierung des Zentrierbolzens (16) bewirkt.

5. Zentriereinrichtung nach einem der Patentansprüche 1 bis 4, **dadurch gekennzeichnet, dass** der dem Zentrierbolzen (16) zugewandte Randbereich (19) der Zentrieröffnung (18) einen Zentrierkegelstumpf oder eine gekrümmte Zentrieranlauffläche aufweist, wodurch der Zentrierbolzen (16) beim Eindringen in die Zentrieröffnung (18) mit dem Zentrierkegelstumpf (18) bzw. der Zentrieranlauffläche zusammen wirkend radial zentriert wird.

6. Zentriereinrichtung nach einem der Patentansprüche 1 bis 5, **dadurch gekennzeichnet, dass** die den axialen Verstellweg der Zentrierbuchse (3) begrenzenden Anschläge (4, 5, 6 bzw. 7, 8, 9)) durch wenigstens eine Längsausnehmung (10 bzw. 11) in der Zentrierbuchse oder in dem Zentrierbuchsenträger (1) und wenigstens einen Anschlagkörper (6 bzw. 9) gebildet sind, wobei ein Umfangsbereich des Anschlagkörpers (6 bzw. 9) in eine Ausnehmung (12, 13) in dem anderen Teil, im Zentrierbuchsenträger oder in der Zentrierbuchse (3) weitgehend spielfrei eingreift und ein anderer Umfangsbereich des Anschlagkörpers (6 bzw. 9) in Achsrichtung der Zentrierbuchse (3) verstellbar in die Längsausnehmung (10 bzw. 11) eingreift und mit den axialen Endbereichen (4, 5 bzw. 7, 8) der Längsausnehmung (10, bzw. 11) zusammen wirkend den axialen Verstellweg der Zentrierbuchse (3) begrenzt.

7. Zentriereinrichtung nach Anspruch 6, **dadurch gekennzeichnet, dass** die Längsausnehmung durch ein Langloch (10 bzw. 11) und der Anschlagkörper durch einen im Querschnitt kreisförmigen Bolzen (6 bzw. 9) oder Stift gebildet sind.

8. Zentriereinrichtung nach einem der Patentansprüche 6 oder 7, **dadurch gekennzeichnet, dass** die Längsausnehmung durch eine Ringausnehmung an einem Innenumfang einer die Zentrierbuchse aufnehmenden Öffnung oder an einem Außenumfang der Zentrierbuchse und der Anschlagkörper durch einen Anschlagring gebildet sind und jeweils in Achsrichtung der Zentrierbuchse die Längserstreckung der Ringausnehmung größer als die Längserstreckung des Anschlagringes ist.

9. Zentriereinrichtung nach einem der Patentansprüche 1 bis 8, **dadurch gekennzeichnet, dass** die elastische Federeinrichtung wenigstens eine Tellerfeder (14) oder Gummifeder oder ein Element aus einem Elastomer aufweist.

10. Zentriereinrichtung nach einem der Patentansprüche 1 bis 9, **dadurch gekennzeichnet, dass** sich bei geschlossenem Falt- oder Klappverdeck oder Hardtop die Zentrierbuchse (3) etwa in-ihrem mittleren Verstellbereich oder in einer Endlage ihres Verstellbereiches befindet.

## Claims

1. A centring device for a motor vehicle with a folding roof or folding top or hard top, the device comprising a projecting centring pin (16) on a pin holder (16') and a centring socket (3) on a holder (1), with a centring opening (18) in the socket (3) which radially centres the pin (16) in the opening after the pin (16) has penetrated into at least a certain region of the opening (18), **characterised in that** either the centring socket (3) in a guide opening (2) in the socket holder (1), or the centring pin in a guide opening of the pin holder, is axially adjustable between stops (4, 5, 6 or 7, 8, 9) and is biased by a resilient spring device (14) against a stop (4 or 7) towards the stationary part or the centring pin (16) or the centring socket.

2. A centring device according to claim 1, **characterised in that** the pin holder (16') is formed by a front region of the closed folding roof or folding top or hard top and the socket holder (1) is formed by a region or a component of an upper apron over the front windscreen of the motor vehicle or vice versa.

3. A centring device according to claim 1 or 2, **characterised in that** the front region of the pin (16) has a centring surface (17) which co-operates with an edge region (19) of the opening (18) in order radially to centre the pin (16).

4. A centring device according to claim 3, **characterised in that** the centring surface (17) is frusto-conical and the smaller diameter of the frusto-conical centring surface (17) adjoins an axially projecting centring lug (20) which has a smaller diameter than the opening (18) and, on insertion of the pin (16) into the centring opening (18) co-operates with the opening (18) in order radially to pre-centre the pin (16).

5. A centring device according to any of claims 1 to 4, **characterised in that** the edge region (19) of the centring opening (18) facing the pin (16) comprises a truncated cone or a curved starting surface, whereby the pin (16), on entering the centring opening (18), co-operates with the truncated cone (18) or starting surface and is radially centred.

6. A centring device according to any of claims 1 to 5, **characterised in that** the stops (4, 5, 6 or 7, 8, 9) axially limiting the travel of the socket (3) when centred are formed by at least one longitudinal recess (10, 11) in the socket or in the socket holder (1) and at least one stop (6 or 9), wherein a peripheral region of the stop (6 or 9) engages substantially without clearance in a recess (12, 13) in the other part or in the socket holder or in the centring socket (3) and another peripheral region of the stop (6 or 9) is adjustable in the axial direction of the socket (3) and engages in the longitudinal recess (10, 11) and co-operates with the axial end regions (4, 5 or 7, 8) of the longitudinal recess (10 or 11) to limit the axial adjustment travel of the centring socket (3).

7. A centring device according to claim 6, **characterised in that** the longitudinal recess is formed by a slot (10, 11) and the stop is formed by a circular cross-section pin (6, 9) or peg.

8. A centring device according to claim 6 or 7, **characterised in that** the longitudinal recess is formed by an annular recess on an inner periphery of the opening receiving the socket or on an outer periphery of the socket, and the stops are formed by a ring, and in the axial direction of the socket the longitudinal extent of the annular recess is greater than the longitudinal extent of the stop ring.

9. A centring device according to any of claims 1 to 8, **characterised in that** the resilient spring device comprises at least one cup spring (14) or rubber spring or an elastomeric component.

10. A centring device according to any of claims 1 to 9, **characterised in that** when the folding roof or top or hard top is closed the socket (3) is approximately in the middle or at an end of its adjustment range.

## Revendications

1. Installation de centrage pour un véhicule automobile équipé d'un toit pliant ou rabattable ou d'un toit rigide comportant :
- un goujon de centrage (16) venant en saillie d'un support de goujon de centrage (16') et une douille de centrage (3) sur un support de douille de centrage (1),
- un orifice de centrage (18) dans la douille de centrage (3) qui, lors de la pénétration d'au moins une zone du goujon de centrage (16) dans l'ouverture de centrage (18), assure le centrage radial du goujon de centrage (16),
installation **caractérisée en ce que**
soit la douille de centrage (3) est montée mobile axialement dans un orifice de guidage (2) du support de douille de centrage (1) soit le goujon de centrage est monté mobile axialement dans un orifice de guidage du support de goujon de centrage entre des butées (4, 5, 6, ou 7, 8, 9) et une installation de ressorts élastiques (14) pousse contre une butée (4, 7) la pièce fixe pour le goujon de centrage (16) ou la douille de centrage.

2. Installation de centrage selon la revendication 1,
**caractérisée en ce que**
le support de goujon de centrage (16') est formé par la zone avant du toit pliant ou repliable ou du toit rigide et le support de douille de centrage (1) est formé par une zone ou une pièce d'un déflecteur supérieur au-dessus du pare-brise avant du véhicule ou inversement.

3. Installation de centrage selon la revendication 1 ou 2,
**caractérisée en ce qu'**
au niveau de sa zone en saillie, le goujon de centrage (16) comporte une surface de centrage (17) qui assure le centrage radial avec une zone de bord (19) de l'orifice de centrage (18) en coopérant avec le goujon de centrage (16).

4. Installation de centrage selon la revendication 3,
**caractérisée en ce que**
la surface de centrage (17) est en forme de tronc de cône et la surface de centrage (17) de petit diamètre de la forme de tronc de cône se poursuit par un bec de centrage (20) venant en axialement en saillie, et dont le diamètre est plus petit que celui de l'orifice de centrage (18) et qui, lorsque le goujon de centrage (16) pénètre dans l'orifice de centrage (18), coopère avec cet orifice (18) et assure un précentrage radial du goujon de centrage (16).

5. Installation de centrage selon l'une des revendications 1 à 4,
**caractérisée en ce que**
la zone de bord (19) de l'orifice de centrage (18) tournée vers le goujon de centrage (16) comporte un tronc de cône de centrage ou une surface d'attaque de centrage, courbe, de façon que lors de la pénétration dans l'orifice de centrage (18), le goujon de centrage (16) soit centré radialement par coopération avec le tronc de cône de centrage (18) ou la surface d'attaque de centrage.

6. Installation de centrage selon l'une des revendications 1 à 5,
**caractérisée en ce que**
les butées (4, 5, 6 ou 7, 8, 9) délimitant la course de réglage axial de la douille de centrage (3) sont formées par au moins une cavité longitudinale (10, 11) dans la douille de centrage ou dans le support de douille de centrage (1) et par au moins un organe de butée (6, 9),
- la zone périphérique de l'organe de butée (6, 9) pénétrant pratiquement sans jeu dans une cavité (12, 13) de l'autre partie du support de douille de centrage ou de la douille de centrage (3), et
- une autre zone périphérique de l'organe de butée (6, 9) réglable dans la direction axiale de la douille de centrage (3), pénètre dans la cavité longitudinale (10, 11) et coopère avec les zones d'extrémités axiales (4, 5 ou 7, 8) de la cavité longitudinale (10, 11) pour limiter la course de réglage axiale de la douille de centrage (3).

7. Installation de centrage selon la revendication 6,
**caractérisée en ce que**
la cavité longitudinale est formée par un trou oblong (10, 11) et l'organe de butée est formé par un goujon (6, 9) ou une broche de section circulaire.

8. Installation de centrage selon la revendication 6 ou 7,
**caractérisée en ce que**
la cavité longitudinale est formée par une cavité annulaire de la périphérie intérieure d'un orifice recevant la douille de centrage ou par la périphérie extérieure de la douille de centrage et l'organe de butée est formé par une bague de butée et chaque fois dans la direction axiale de la douille de centrage, l'extension longitudinale de la cavité annulaire est plus grande que l'extension longitudinale de la bague de butée.

9. Installation de centrage selon l'une des revendications 1 à 8,
**caractérisée en ce que**
l'installation de ressorts élastiques comporte au moins un ressort Belleville (14) ou un ressort en caoutchouc ou un élément en un élastomère.

10. Installation de centrage selon l'une des revendications 1 à 9,
**caractérisée en ce que**
lorsque le toit pliant ou rabattable ou le toit rigide sont fermés, la douille de centrage (3) se trouve sensiblement dans sa zone de déplacement moyenne ou dans sa position de fin de course de sa zone de déplacement.
